# EUROPÄISCHE PATENTSCHRIFT

(11) **EP 1 687 555 B1**
(45) Veröffentlichungstag und Bekanntmachung des Hinweises auf die Patenterteilung: **22.12.2010**
(21) Anmeldenummer: 04802652.0
(22) Anmeldetag: 28.10.2004
(51) Int. Cl.: F16J 9/06

(54) **ÖLABSTREIFRING FÜR KOLBEN VON VERBRENNUNGSMOTOREN**
OIL CONTROL RING FOR PISTONS OF INTERNAL COMBUSTION ENGINES
SEGMENT RACLEUR DE PISTON POUR MOTEURS A COMBUSTION INTERNE

(30) Priorität: 30.10.2003 DE 10350567
(43) Veröffentlichungstag der Anmeldung: 09.08.2006
(73) Patentinhaber: MAHLE GMBH, 70376 Stuttgart (DE)
(72) Erfinder: FRANZ, Holger, 73666 Baltmannsweiler (DE); STRAUSS, Martin, 70378 Stuttgart (DE)
(74) Vertreter: Pohle, Reinhard
(86) Internationale Anmeldenummer: PCT/DE2004/002397
(87) Internationale Veröffentlichungsnummer: WO 2005/043013

(56) Entgegenhaltungen:
- WO-A-02/097310

## Beschreibung

Die Erfindung betrifft einen Ölabstreifring für Kolben von Verbrennungsmotoren mit einer an der Zylinderwand anliegenden geschlossenen Lauffläche sowie mit zueinander parallelen Ringflanken, zwischen denen mittig im Ringrücken eine über den Umfang verlaufende radiale Ausnehmung zur Aufnahme einer Spiralfeder angeordnet ist, wobei umfangsseitig die Ringflanken zum Ringrücken hin wellenförmig ausgeformte Stirnflächen aufweisen.

Aus der DE 198 08 483 A1 ist ein Ölabstreifring für Verbrennungsmotoren bekannt, bei dem zur Verbesserung seiner Flexibilität über den Umfang verteilt Schlitze angeordnet sind, die sich axial durch den gesamten Ringquerschnitt erstrecken und Ölabflussöffnungen bilden. Nachteilig bei den aus Blech geformten Ölabstreifring ist die Gefahr einer Girlandenbildung infolge der in den Ring eingebrachten Schlitze.

Eine andere Ausführungsform eines Ölabstreifrings ist aus der DE 100 41 803 C2 bekannt, bei der zur Erhöhung der Ringflexibilität das Formfüllungsvermögen des Rings verändert wird. Da die maßgebliche Einflussgröße für das Formfüllungsvermögen neben der Tangentialkraft das radiale Flächenträgheitsmoment ist, welches bekanntermaßen von der dritten Potenz von der radialen Wandstärke abhängt, sind bei der vorgenannten DE über den Umfang verteilt die radiale Wandstärke reduzierende pilzförmige Ausnehmungen vorgesehen, die ausschließlich von der Ringinnenseite sich radial in Richtung der äußeren Umfangsfläche erstrecken. Nachteilig an dieser Ausführung ist die komplizierte Formung der Ausnehmungen und deren aufwendige Herstellung.

Ein gattungsgemäßer Ölabstreifring wird in der WO 02/097310 A1 beschrieben, der mit einer an der Zylinderwand anliegenden geschlossenen Ringlauffläche sowie mit einer zueinander parallel verlaufenden oberen und unteren Ringflanke versehen ist.

Zwischen den Ringflanken mittig im Ringrücken ist eine über den Umfang verlaufende radiale Ausnehmung zur Aufnahme einer schraubenförmigen Feder angeordnet, wobei umfangsseitig die Ringflanken zum Ringrücken hin wellenförmig ausgeformte Stirnflächen aufweisen. Eine Reduzierung des Formfüllungsvermögens wird bei dieser Ausführung durch die Gestaltung der wellenförmigen Stirnflächen der oberen und unteren Ringflanke erreicht, die zueinander deckungsgleich ausgeführt sind. Das bedeutet, dass an Stellen, wo an der oberen Stirnfläche ein Wellenberg angeordnet ist, ist auch an der unteren Stirnfläche ein Wellenberg angeordnet, wobei diese Anordnung natürlich auch für die Wellentäler gilt.

In der Praxis hat sich aber gezeigt, das der Ölabstreifring über seinen Umfang nicht gleichmäßig trägt, d.h. an Stellen, wo ein Wellental ist, trägt der Ring und an Stellen, wo ein Wellenberg ist, hat die Lauffläche des Ölabstreifringes keinen oder nur schwachen Kontakt mit der Zylinderwand. Das führt letztlich zu einem erhöhten Ölverbrauch im Motorbetrieb. Eine Erhöhung der Tangentialkraft des Ölabstreifringes würde zu einem gleichmäßigeren Trag führen, jedoch wäre eine unerwünschte Erhöhung der Reibleistung die Folge.

Es ist Aufgabe der Erfindung, ein gegenüber dem Stand der Technik verbessertes Formfüllungsvermögen eines Ölabstreifringes für einen Verbrennungsmotor mit einer derartigen Tangentialkraft zu schaffen, dass der Ring eine geringe Reibleistung aber auch geringen Ölverbrauch im Motorbetrieb gewährleistet.

Erfindungsgemäß wird die Aufgabe durch die Merkmale des Patentanspruchs 1 gelöst. Insbesondere hat sich überraschenderweise durch die gezielte geometrische Anordnung der zueinander phasenverschobenen wellenförmigen Stirnflächen der oberen und unteren Ringflanke gezeigt, dass ein gleichmäßiger Trag über den Umfang der Lauffläche des Ölabstreifringes zur Zylinderwand erreicht wird. Zusätzlich konnte der Ölverbrauch verringert werden, weil das von der Zylinderwand abgestreifte Öl nicht wie bei deckungsgleicher Welligkeit der Stirnflächen direkt über die als Durchflusskanäle wirkenden Wellentäler leichter in Richtung Brennraum strömen kann, sondern quasi durch ein Labyrinth infolge des Phasenversatzes der Stirnflächen von oberer und unterer Ringflanke daran gehindert wird.

Zweckmäßige Ausgestaltungen der Erfindung sind Gegenstand der Unteransprüche.

Ein Ausführungsbeispiel der Erfindung wird im Folgenden anhand der Zeichnungen beschrieben. Es zeigen
- Fig. 1: eine Draufsicht des erfindungsgemäßen Ölabstreifrings;
- Fig. 2: eine Schnittdarstellung des Ölabstreifringes entlang der Linie I - I aus Fig. 1;
- Fig. 3: eine Schnittdarstellung des Ölabstreifringes im Kolben-Zylinder-Bereich eines Verbrennungsmotors entlang der Linie I - I aus Fig. 1.

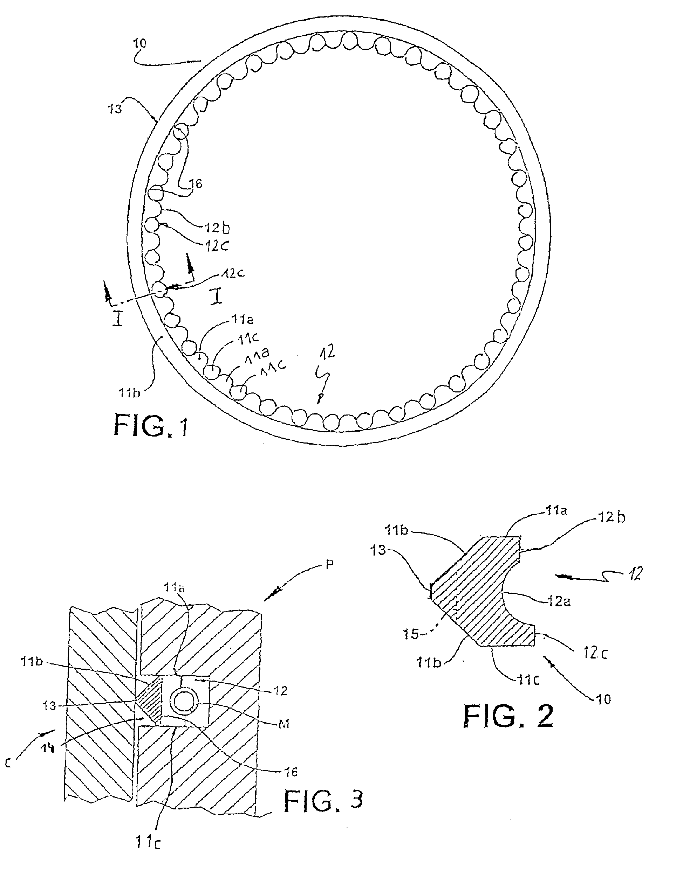

Ein gemäß Fig. 2 mit 10 bezeichneter einstückiger Ölabstreifring weist eine Lauffläche 13 auf, an der sich jeweils in axialer Ringrichtung geneigte Ringseitenflanken 11b anschließen, die in zueinander parallel ausgerichtete Ringflanken, eine obere Ringflanke 11 a und eine untere Ringflanke 11 c, übergehen. Im Ringrücken 12 ist eine über den Umfang des Ölabstreifrings verlaufende radiale Ausnehmung 12a zur Aufnahme einer schraubenförmigen Feder M, wie aus Fig. 3 ersichtlich, vorgesehen. Gemäß Fig. 3 ist der Ölabstreifring 10 in einer Ringnut 14 eines Kolbens P so angeordnet, dass seine geschlossene Lauffläche 13 an der Zylinderwand eines Zylinders C anliegt.

Gemäß Fig. 1 weisen die obere und untere Ringflanke 11a und 11 c zum Ringrücken 12 hin Stirnflächen 12b und 12 c auf, die wellenförmig ausgebildet sind und über den gesamten Umfang des Ölabstreifrings verlaufen. Erfindungsgemäß sind die wellenförmigen Stirnflächen 12b und 12c der oberen und unteren Ringflanke zueinander derart phasenverschoben angeordnet, dass nach Fig. 1 axial gesehen, der Scheitelpunkt eines Wellenbergs der oberen Ringflanke 11a mit dem Scheitelpunkt eines Wellentals der unteren Ringflanke 11 c zusammenfällt- also eine Phasenverschiebung von bevorzugt 180° erfolgt. Bevorzugt folgt die wellenförmige Ausbildung der Stirnkanten 12b und 12c einer Sinusfunktion, jedoch sind ebenso aneinandergereihte um 180° richtungswechselnde Halbkreise oder an ihren Enden abgerundete V-förmige Gestaltungsformen möglich, so dass die als 15 und 16 bezeichneten oberen und unteren Öldurchlässe entsprechend geformt sind. Wie bereits dargelegt, besteht dadurch der Vorteil, dass das von der Zylinderwand abgestreifte Öl infolge einer labyrinthartigen Ölführung nicht in Richtung Brennraum zurückfließen kann.

Es hat sich des Weiteren gezeigt, dass auch mittels einer zwischen 170° und 190° betragenden Phasenverschiebung ein sehr guter Trag der Lauffläche 13 des Ölabstreifrings 10 auf der Zylinderwand gewährleistet ist, wobei die Wellenanzahl von oberer und unterer Ringflanke bevorzugt gleich sein sollte, aber auch keine Begrenzung der Erfindung darstellt. Eine Wellenanzahl zwischen 20 und 50 bezogen auf den Umfang des Ölabstreifrings 10, zeigen gute Ergebnisse hinsichtlich des Tragverhaltens.

Die Stirnflächen 12b und 12c der oberen und unteren Ringflanke 11a, 11 b weist erfindungsgemäß eine Wellenamplitude auf, die wenigstens dem halben Durchmesser der schraubenförmigen Feder M entspricht. Dadurch wird erreicht, dass eine bestimmte Tangentialkraft des Ölabstreifrings erzielt wird, die eine unerwünschte Reibleistung nicht übersteigt. In dieser Ausführung liegt die schraubenförmige Feder M im Grund - also Scheitelpunk - der über den Umfang verlaufenden radialen Ausnehmung 12a ohne Unterbrechung an.

Eine Herstellung des Ölabstreifrings kann durch pulvermetallurgische Prozesse, wie Pressen und Sintern erfolgen, durch die eine Formgebung der Stirnflächen 12b und 12c auf einfache Weise ohne Nacharbeitung realisierbar ist. Ebenso ist jedoch eine Herstellung des Ölabstreifrings aus Stahlblech möglich. Auch ist die erfindungsgemäße Ausführungsform nicht auf solche Ölabstreifringe beschränkt, wie in den Figuren 4 - 6 der eingangs genannten WO 02/097310 A1 dargestellt.

### Bezugszeichen

- 10: Ölabstreifring
- 11 a: obere Ringflanke
- 11 b: Ringseitenflanke
- 11 c: untere Ringflanke
- 12: Ringrücken
- 12a: radiale Ausnehmung
- 12b: Stirnfläche der oberen Ringflanke
- 12c: Stirnfläche der unteren Ringflanke
- 14: Ringnut
- 13: Lauffläche
- 15: oberer Öldurchlass
- 16: unterer Öldurchfluss
- C: Zylinder
- M: Feder
- P: Kolben

## Patentansprüche

1. Ölabstreifring (10) für Kolben von Verbrennungsmotoren, mit einer an der Zylinderwand anliegenden geschlossenen Lauffläche (13) sowie mit einer zueinander parallel verlaufenden oberen und unteren Ringflanke (11 a, 11 c) zwischen denen mittig im Ringrücken (12) eine über den Umfang verlaufende radiale Ausnehmung (12a) zur Aufnahme einer schraubenförmigen Feder (M) angeordnet ist, wobei umfangsseitig die Ringflanken (11a, 11 c) zum Ringrücken (12) hin wellenförmig ausgeformte Stirnflächen (12b, 12c) aufweisen,
**dadurch gekennzeichnet,**
**dass** die wellenförmigen Stirnflächen (12b, 12c) der oberen und unteren Ringflanke zueinander phasenverschoben angeordnet sind.

2. Ölabstreifring für Kolben von Verbrennungsmotoren nach Anspruch 1, **dadurch gekennzeichnet, dass** die Phasenverschiebung 170° bis 190°, bevorzugt 180°, beträgt.

3. Ölabstreifring für Kolben von Verbrennungsmotoren nach Anspruch 1, **dadurch gekennzeichnet, dass** die Wellenform der Stirnflächen (12b, 12c) einer Sinusfunktion folgt.

4. Ölabstreifring für Kolben von Verbrennungsmotoren nach Anspruch 1, **dadurch gekennzeichnet, dass** die Stirnflächen (12b, 12c) der oberen und unteren Ringflanke (11 a, 11 c) umfangsseitig eine Wellenanzahl 20 bis 50 aufweisen.

5. Ölabstreifring für Kolben von Verbrennungsmotoren nach Anspruch 4, **dadurch gekennzeichnet, dass** die Wellenanzahl der Stirnflächen (12b, 12c) von oberer und unterer Ringflanke gleich ist.

6. Ölabstreifring für Kolben von Verbrennungsmotoren nach Anspruch 1, **dadurch gekennzeichnet, dass** die Stirnflächen (12b, 12c) von oberer und unterer Ringflanke eine Wellenamplitude aufweist, die wenigstens dem halben Durchmesser der schraubenförmigen Feder (M) entspricht.

## Claims

1. An oil control ring (10) for pistons of internal combustion engines, having a closed contact surface (13), contacting the cylinder wall, as well as an upper and a lower circular shoulder (11a, 11c) extending parallel in reference to each other, between which a recess (12a) Is arranged centrally in the annular back (12), said recess extending radially over the circumference to accept a helical spring (M), with the circular shoulders (11 a, 11c) at their circumference facing the annular back (12) comprising wavelike facial areas (12b, 12c), **characterized in that** the wavelike facial areas (12b, 12c) of the upper and lower circular shoulders are arranged phase-shifted In reference to each other.

2. An oil control ring for pistons of internal combustion engines according to claim 1, **characterized in that** the phase-shift ranges from 170° to 190°, preferably amounts to 180°.

3. An oil control ring for pistons of internal combustion engines according to claim 1, **characterized In that** the wavelike shape of the facial areas (12b, 12c) follows a sinus function.

4. An oil control ring for pistons of internal combustion engines according to claim 1, **characterized in that** the facial areas (12b, 12c) of the upper and lower circular shoulders (11a, 11c) show a number of waves from 20 to 50 over their circumference.

5. An oil control ring for pistons of internal combustion engines according to claim 4, **characterized In that** the number of waves of the facial areas (12b, 12c) of the upper and the lower circular shoulders is equal.

6. An oil control ring for pistons of internal combustion engines according to claim 1, **characterized in that** the facial areas (12b, 12c) of the upper and lower circular shoulders comprise an amplitude of the wave, which Is equivalent to at least half the diameter of the helical spring (M).

## Revendications

1. Segment racleur (10) pour piston de moteurs à combustion interne, comprenant une surface de portée (13) fermée s'appliquant sur la paroi du cylindre et comprenant des flancs annulaires (11a, 11c) supérieurs et inférieurs s'étendant parallèlement, entre lesquels un évidement radial (12a) s'étendant sur la périphérie est agencé au milieu des parties arrières annulaires (12) du segment en vue de loger un ressort hélicoïdal (M), les flancs annulaires (11a, 11c) présentant sur la partie périphérique des surfaces frontales (12b, 12c) de forme ondulée, dirigées vers les parties arrières annulaires (12),
**caractérisé en ce que**,
les surfaces frontales ondulées (12b, 12c) des flancs annulaires supérieurs et inférieurs sont agencées en déphasage les unes par rapport aux autres.

2. Segment racleur pour piston de moteurs à combustion interne selon la revendication 1, **caractérisé en ce que** le déphasage est de 170° à 190°, de préférence 180°.

3. Segment racleur pour piston de moteurs à combustion interne selon la revendication 1, **caractérisé en ce que** la forme ondulée des surfaces frontales (12b, 12c) suit une fonction sinusoïdale.

4. Segment racleur pour piston de moteurs à combustion interne selon la revendication 1, **caractérisé en ce que** les surfaces frontales (12b, 12c) des flancs annulaires supérieurs et inférieurs (11a, 11c) présentent un nombre d'ondulations de 20 à 50 sur la partie périphérique.

5. Segment racleur pour piston de moteurs à combustion interne selon la revendication 4, **caractérisé en ce que** le nombre d'ondulations des surfaces frontales (12b, 12c) des flancs annulaires supérieurs et inférieurs est identique.

6. Segment racleur pour piston de moteurs à combustion interne selon la revendication 1, **caractérisé en ce que** les surfaces frontales (12b, 12c) des flancs annulaires supérieurs et inférieurs présentent une amplitude d'ondulations qui correspond à la moitié du diamètre du ressort hélicoïdal (M).
